# EUROPÄISCHE PATENTSCHRIFT

(11) **EP 0 579 801 B1**
(45) Veröffentlichungstag und Bekanntmachung des Hinweises auf die Patenterteilung: **02.05.1997**
(21) Anmeldenummer: 93902239.8
(22) Anmeldetag: 21.01.1993
(51) Int. Cl.: G09B 23/28

(54) **LEHR- UND ÜBUNGSGERÄT ZUR SIMULATION UND ÜBUNG ZAHNÄRZTLICH-KLINISCHER ARBEITSGÄNGE UND ZUR DURCHFÜHRUNG ZAHNTECHNISCHER ARBEITEN**
TRAINING DEVICE FOR SIMULATING AND PRACTISING DENTAL-TREATMENT PROCEDURES AND FOR CARRYING OUT DENTAL-TECHNICIAN'S WORK
APPAREIL D'ENSEIGNEMENT ET D'ENTRAINEMENT DESTINE A LA SIMULATION ET A L'APPRENTISSAGE DE METHODES DE TRAVAIL CLINICO-DENTAIRES AINSI QU'A LA REALISATION DE TRAVAUX EFFECTUES EN LABORATOIRE DENTAIRE

(30) Priorität: 11.02.1992 DE 4203958
(43) Veröffentlichungstag der Anmeldung: 26.01.1994
(73) Patentinhaber: KALTENBACH & VOIGT GMBH & CO., D-88400 Biberach (DE)
(72) Erfinder: BERLINGHOFF, Frank, D-7970 Leutkirch 1 (DE); KLAMER, Helmut, D-7970 Leutkirch (DE)
(74) Vertreter: Schmidt-Evers, Jürgen, Dipl.-Ing.
(86) Internationale Anmeldenummer: EP9300134
(87) Internationale Veröffentlichungsnummer: WO9316458

(56) Entgegenhaltungen:
- DE-A- 3 941 332

## Beschreibung

Die Erfindung bezieht sich auf ein Lehr- und Übungsgerät zur Simulation und Übung zahnärztlich-klinischer Arbeitsgänge und zur Durchführung zahntechnischer Arbeiten.

Ein Gerät dieser Art ist in der DE 39 41 332 Al beschrieben. Es handelt sich um ein kombiniertes Lehr- und Übungsgerät, bestehend aus einem feststehenden zahntechnischen Lehr- und Übungsgerät und einem ortsbeweglichen zahnärztlichen Lehr- und Übungsgerät, wobei letzteres kastenförmig ausgebildet ist und bei seinem Nichtgebrauch unter die eine Hälfte des tischförmig ausgebildeten feststehenden zahnärztlichen Lehr- und Übungsgerätes so schiebbar ist, daß im Bereich der anderen Hälfte noch ein Bearbeitungsplatz für zahntechnische Arbeiten an diesem Lehr- und Übungsgerät verbleibt. Zur Ausübung auch spanabhebender Arbeiten ist im Bereich der freien Hälfte dieses Gerätes eine Absaughaube angeordnet, um bei solchen Arbeiten zu vermeiden, daß Stäube in die Umgebung gelangen.

Das ortsbewegliche zahnärztliche Lehr- und Übungsgerät ist mit einem Phantomkopf bzw. einer -büste versehen, an der die zahnärztlich-klinischen Arbeitsgänge vorgenommen werden können, wobei die Phantombüste aus einer heruntergeschwenkten Parkstellung, in der sie unter das zahntechnische Lehr- und Übungsgerät schiebbar ist, in mehrere Arbeitsstellungen hoch- und zurückschwenkbar ist, die erforderlichen Behandlungspositionen entsprechen. Um auch mit Wasserkühlung und Wasserreinigung der Behandlungsstelle arbeiten zu können, ist dem zahnärztlichen Lehr- und Übungsgerät eine Spraynebel-Absaugvorrichtung mit einem Saugrohr zugeordnet, das in den Mund des Phantomkopfes einhängbar ist.

In der DE 39 41 332 Al ist zwar beschrieben, daß dem Gerät ein Absauganschluß eines Absaugaggregates für Flüssigkeit und/oder Staub zugeordnet sein kann, jedoch ist nicht beschrieben, ob der Absauganschluß für den Anschluß der beschriebenen Spraynebelabsaugung und Absaughaube für Feststoff-Absaugung dient oder ob der Absauganschluß als weitere Möglichkeit zur Absaugung von Flüssigkeit und/oder Staub dient.

Der Erfindung liegt die Aufgabe zugrunde, bei Gewährleistung eines geringen Bau- und Herstellungsaufwandes und geringen Leistungsverbrauchs bei einem Lehr- und Übungsgerät der eingangs angegebenen Art eine einfache Bedienung zu ermöglichen.

Diese Aufgabe wird durch die Merkmale des Anspruchs 1 gelöst. Vorteilhafte Weiterbildungen der Erfindung sind in den Unteransprüchen beschrieben.

Beim erfindungsgemäßen Lehr- und Übungsgerät ist nur eine gemeinsame Saugquelle vorhanden, deren Saugleitung sich verzweigt und eine Flüssigkeitssaugvorrichtung und eine Feststoffsaugvorrichtung bildet. Dabei ist den Saugleitungszweigen vorzugsweise im Bereich des Abzweigs eine Umschaltvorrichtung zum Öffnen des einen und Schließen des anderen Saugleitungszweigs zugeordnet. Hierdurch wird bei einfacher und kostengüngstig herstellbarer Ausgestaltung des Lehr- und Übungsgerätes dessen Anforderungen voll erfüllt, weil bei zahnärztlichen Arbeiten nur die Flüssigkeitssaugvorrichtung und bei zahntechnischen Arbeiten nur die Feststoffsaugvorrichtung benötigt wird und bei einem Arbeitswechsel die Saugvorrichtung für die erforderliche Funktion umgeschaltet werden kann. Hierdurch wird nicht nur der Aufwand des Lehr- und Übungsgerätes verringert, sondern auch die Baugröße, weil nur eine Saugquelle erforderlich ist.

In den Unteransprüchen sind Merkmale enthalten, die zu einer praktischen und zweckmäßigen Anordnung der zugehörigen Filtervorrichtung führen, eine einfache und handhabungsfreundliche Umschaltung gewährleisten und zu einer weiteren Vereinfachung des Lehr- und Übungsgerätes bei Gewährleistung einer kostengünstigen Herstellung führen.

Nachfolgend werden die Erfindung und weitere durch sie erzielbare Vorteile anhand von bevorzugten Ausführungsbeispielen und einer Zeichnung näher erläutert. Es zeigt
Fig. 1 ein aus einem feststehenden zahntechnischen Lehr- und Übungsgerät und einem ortsbeweglichen zahnärztlichen Lehr- und Übungsgerät kombiniertes Lehr- und Übungsgerät in perspektivischer Darstellung;
Fig. 2 das zahnärztliche Lehr- und Übungsgerät mit einer Absauganlage und einer Wasserabscheidervorrichtung in perspektivischer Darstellung;
Fig. 3 die Absauganlage in schematischer Darstellung;
Fig. 4 das Lehr- und Übungsgerät nach Fig. 2 in der Seitenansicht von links, teilweise geschnitten;
Fig. 5 die in Fig. 2 mit x gekennzeichnete Einzelheit im vergrößerten vertikalen Schnitt;
Fig. 6 ein ortsunbewegliches zahnärztliches Lehr- und Übungsgerät in perspektivischer Darstellung als einzelne Einheit;
Fig. 7 ein kombiniertes Lehr- und Übungsgerät abgewandelter Ausgestaltung in perspektivischer Darstellung.

Das kombinierte Lehr- und Übungsgerät 1 besteht aus dem feststehenden zahntechnischen Lehr- und Übungsgerät 2 in Form eines Arbeitstisches 3 mit einer horizontalen Arbeitsplatte 4 und vier Füßen oder zwei seitlichen vertikalen Fußplatten 5 und dem ortsbeweglichen zahnärztlichen Lehr- und Übungsgerät 6, das einen schrankförmigen Unterbau 7 aufweist, auf dem ein Phantomkopf 8 und vorzugsweise eine Phantombüste 9 teilweise verdeckt in einer vertikalen Ebene ein- und ausschwenkbar und in gewünschten Schwenkstellungen feststellbar gelagert ist. Das auf Rollen 6a stehende zahnärztliche Gerät 6 ist in seiner Breite nur etwa halb so groß bemessen wie das zahntechnische Gerät 2, und es ist bei seinem Nichtgebrauch in eine Parkstellung unterhalb der Arbeitsplatte 4 im Bereich dessen einer Seitenhälfte schiebbar, so daß die andere Seitenhälfte als zahntechnischer Bearbeitungsplatz 11 zur Verfügung steht.

Der mit einer feststehenden und einer beweglichen Lampe 12, 13 bestückte Arbeitstisch 3 kann mit wenigstens einem angetriebenen zahntechnischen Werkzeug zur Ausführung zahntechnischer Arbeiten ausgerüstet sein, was aus Vereinfachungsgründen nicht dargestellt ist. Eine dem zahntechnischen Gerät 2 zugeordnete Staubabsaugvorrichtung 14, vorzugsweise in Form einer Absaughaube 15, ist im mittleren Bereich des Bearbeitungsplatzes 11 an der Vorderseite 16 des Tisches 3, insbesondere an der Arbeitsplatte 4, oder am zahnärztlichen Gerät 6 gehalten und auch von diesem Gerät 6 aus mit Saugluft versorgt.

Dem zahnärztlichen Gerät 6 ist eine Flüssigkeit- oder Sprayabsaugvorrichtung 17 zugeordnet bestehend aus einem flexiblen Schlauch 18 und einem an dessen freien Ende angeordneten Saugrohr 19, das zur Absaugung in den Mund des Phantomkopfes 8 eingeführt wird. Dem zahnärztlichen Gerät 6 ist eine Haltevorrichtung 22 für den Sprayabsauger 20 bei dessen Nichtgebrauch vorgesehen. Bei der vorliegenden Ausgestaltung ist der Sprayabsauger 20 an einem Ende der die Phantombüste 9 an eine Tragsäule lagernden Schwenkachse 23 aufhängbar.

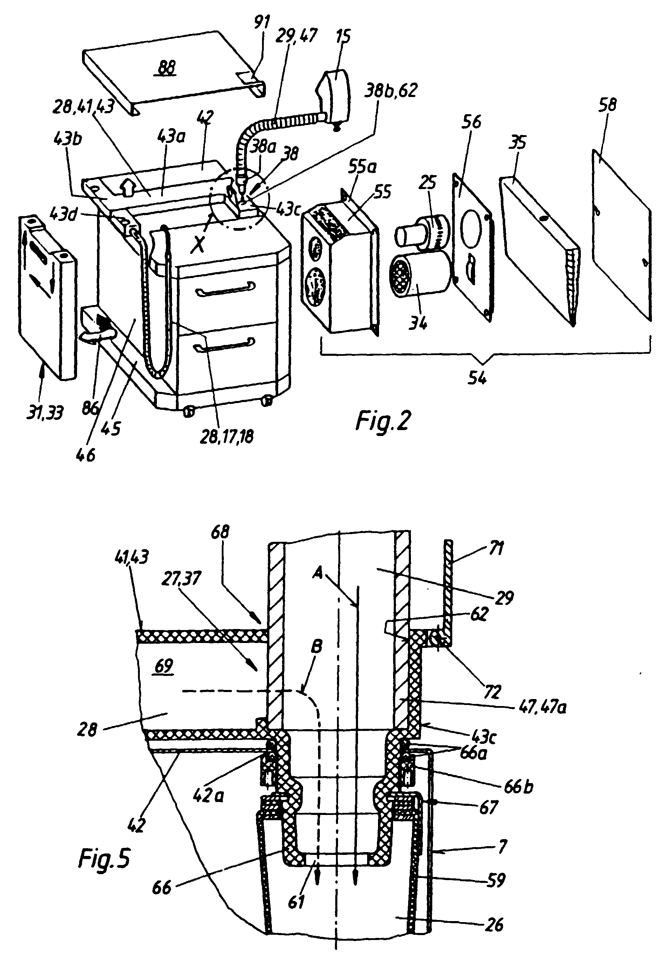

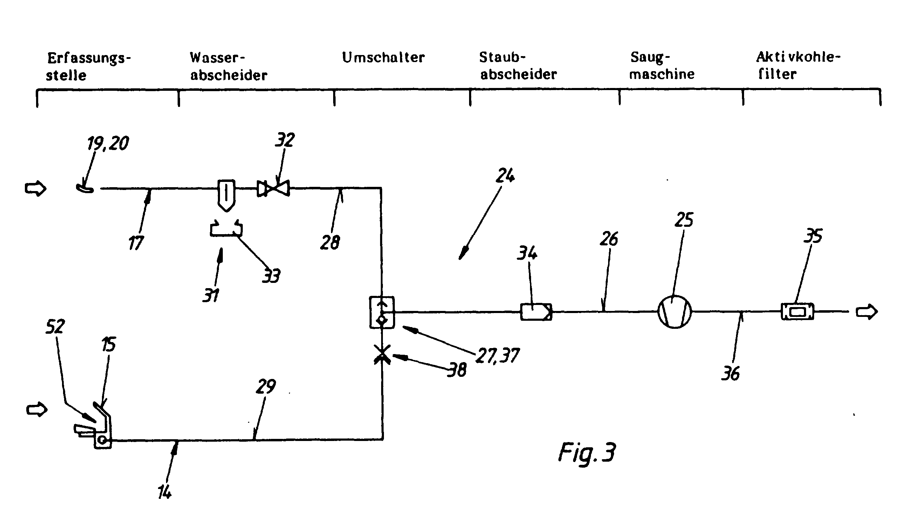

Die Staub- und Sprayabsaugvorrichtungen 14, 17 sind Teile einer dem zahnärztlichen Gerät 6 zugeordneten gemeinsamen Absauganlage 24, gemäß Figuren 2 und 3 eine Saugmaschine 25, von der ein gemeinsamer Saugleitungsabschnitt 26 ausgeht, der an einem Abzweig 27 in einen Spraysaugleitungsabschnitt 28 und einen Staubabsaugabschnitt 29 verzweigt, von denen ersterer sich zum Spraysauger 20 erstreckt, während letzterer sich zum Absaugmaul 15 erstreckt, umfaßt.

An den Spraysaugleitungsabschnitt 28 ist ein Wasserabscheider 31 mit einem Schwimmer 32 angeschlossen, der vorzugsweise elektrisch ein Signal abgibt und/oder die Saugmaschine 25 ausschaltet, wenn das Wasser in einem Sammelbehälter 33 des Wasserabscheiders 31 einen vorbeschriebenen Füllpegel übersteigt. Mit 34 ist ein Staubabscheider bezeichnet, der im gemeinsamen Saugleitungsabschnitt 26 angeordnet ist. Das Bezugszeichen 35 bezeichnet ein Filter, insbesondere ein Aktivkohlefilter, das in der von der Saugmaschine 25 abführenden Abluftleitung 36 angeordnet ist. Im Abzweig 27 ist eine Umschaltvorrichtung 37 für die Saugluft vorgesehen, bei der jeweils eine der beiden Absaugleitungen 28, 29 mit der Saugmaschine 25 verbunden ist, während der andere Absaugleitungsabschnitt gesperrt ist. Das Bezugszeichen 38 bezeichnet eine Steckkupplung für den bzw. im Staubabsaugleitungsabschnitt 29, die es ermöglicht, letzteren bei Nichtgebrauch der Staubabsaugvorrichtung 14 zu entfernen und bei Gebrauch wieder anzuschließen. Vorzugsweise ist die Anordung so getroffen, daß die Umschaltvorrichtung 37 beim Einstecken des Steckers 38a in die Steckkupplung 38b so umgeschaltet wird, daß der Staubabsaugleitungsabschnitt 29 geöffnet und der Sprayabsaugabschnitt 28 geschlossen wird.

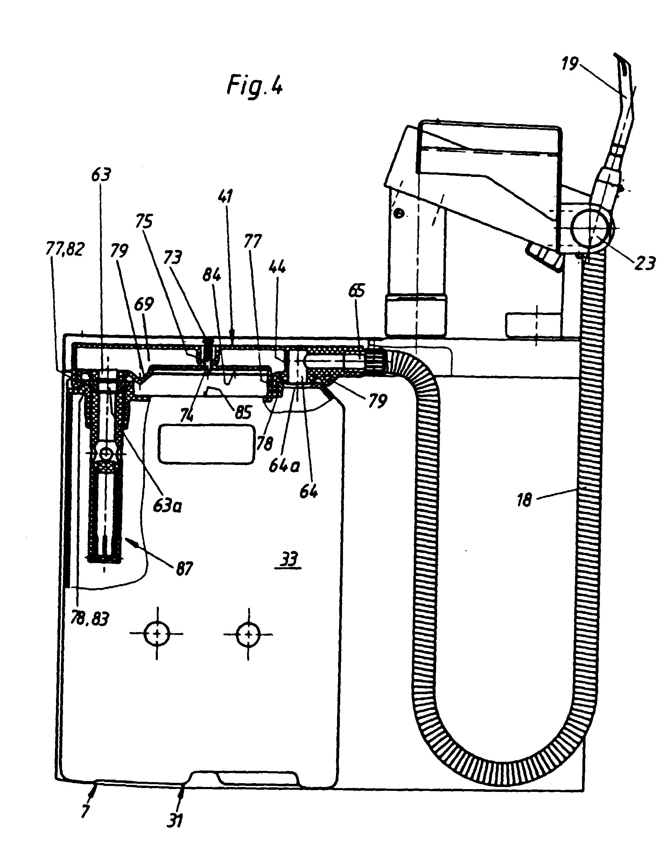

Wie insbesondere aus Fig. 2 zu entnehmen ist, ist die Saugmaschine 25 auf der einen Seite des schrankförmigen Unterbaus 7, hier auf der rechten Seite angeordnet, und der Wasserabscheider 31 ist auf der anderen Seite des Unterbaus 7 angeordnet, wobei beide vorgenannten Teile vom Unterbau 7 getragen sind und durch ein Saugleitungsteil 41 miteinander verbunden sind. Beim vorliegenden Ausführungsbeispiel wird das Saugleitungsteil 41 durch ein auf einer Deckwand 42 des Unterbaus 7 angeordnetes Saugleitungsrohr 43 gebildet, das eine flache, vorzugsweise rechteckige Querschnittsform aufweist und in der Draufsicht L-förmig geformt sein kann und somit aus einem sich quer zum Unterbau 7 erstreckenden Saugleitungsrohrabschnitts 43a und einem sich von dessen einen, hier linken Ende, in längsrichtung des Unterbaus erstreckenden Saugleitungsrohrabschnitt 43b besteht. Letzterer erstreckt sich vorzugsweise nach hinten. Am freien Ende des Saugleitungsrohrabschnitts 43a kann seitlich ein weiterer Saugleitungsrohrabschnitt 43c angeordnet sein, der sich beim vorliegenden Ausführungsbeispiel aus konstruktiven Gründen vorzugsweise nach vorne erstreckt, so daß das Saugleitungsrohr 43 in der Draufsicht eine Z-Form aufweist. Dem Saugleitungsrohrabschnitt 43b gegenüberliegend erstreckt sich vom Saugleitungsrohrabschnitt 43a ein weiterer Saugleitungsrohrabschnitt 43d entsprechend der Querschnittsform nach vorne, so daß sich ein in der Draufsicht gesehen T-förmiger Saugrohrkörper ergibt, der vorzugsweise aus Kunststoff besteht. Während der Hohlraum des Saugleitungsrohrabschnitts 43c mit den Hohlräumen der Saugleitungsrohrabschnitte 43a und 43b in Verbindung steht, ist der Hohlraum des Saugleitungsrohrabschnitts 43d durch eine Trennwand 44 (Fig. 4) vom Hohlraum des L- bzw. Z-förmigen Saugleitungsrohrs 43 getrennt. Die Saugleitungsrohrabschnitte 43b, 43d befinden sich in einer den Unterbau 7 seitlich überragenden Position. Im unteren Bereich des Unterbaus 7 ist ein seitlich vorspringender Tragschenkel 45 vorgesehen, der sich horizontal erstreckt. Der Wasserabscheider 31 ist in einem Wasser-Sammelbehälter 33 angeordnet, der von einer solchen schmalen Bauweise und von einer solchen Höhe ist, daß er zwischen dem Tragschenkel 45 und den Saugleitungsrohrabschnitten 43b, 43c paßt, wobei er seitlich von der benachbarten Seitenwand 46 des Unterbaus 7 gestützt sein kann.

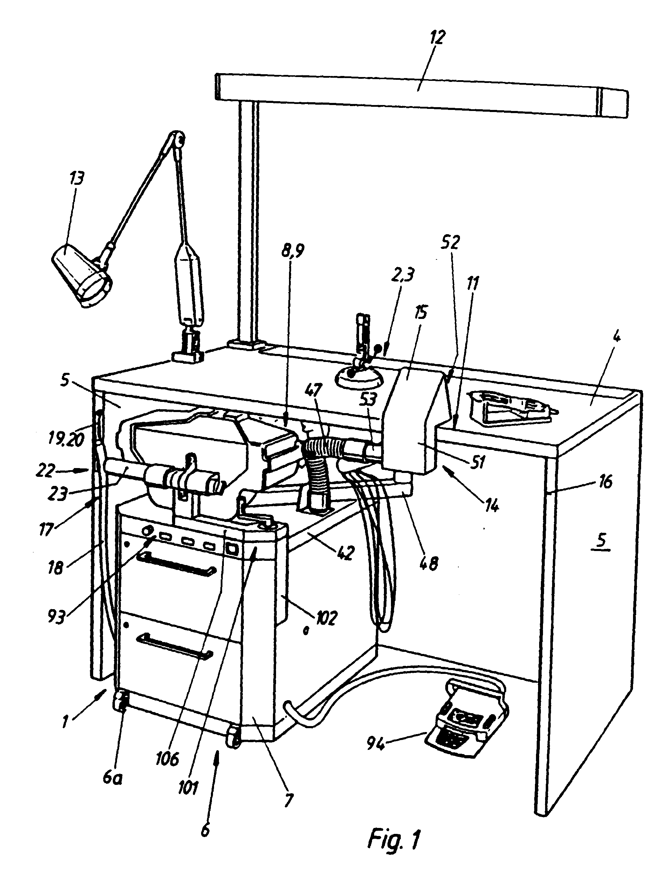

Das in noch zu beschreibender Weise mit der Absauganlage 24 wahlweise verbindbare Absaugmaul 15 ist am äußeren Ende eines horizontalen Schwenkarms 48 (Fig. 1) vorzugsweise um eine vertikale Schwenkachse schwenkbar in einem zugehörigen Lager gelagert, wobei das innere Ende des Schwenkarms 48 durch ein Gelenk mit vertikaler Schwenkachse mit dem Unterbau 7 verbunden ist. Das Gelenk befindet sich an der Oberseite des Unterbaus 7, vorzugsweise in einer zentralen Position. Das Absaugmaul 15 ist durch ein winkelförmiges Gehäuse 51 mit einer stirnseitigen Saugöffnung 52 am horizontalen Schenkel der Winkelform gebildet, während im unteren Bereich des vertikalen Gehäuseschenkels auf der dem zahnärztlichen Gerät 6 zugewandten Seite ein Anschlußstutzen 53 angeordnet ist, der durch einen flexiblen Saugschlauch 47 mit dem Saugleitungsteil 41 verbunden ist.

Im folgenden werden die sich durch das Saugleitungsteil 41 erstreckenden Strömungswege zwischen der Saugmaschine 25 und dem Sprayabsauger 20 sowie dem Absaugmaul 15 beschrieben.

Wie Fig. 2 deutlich zeigt, ist eine Saugeinheit 54 in einem kastenförmigen Saugeinheitsgehäuse 55 angeordnet, dem im Unterbau 7 ein seitlicher Freiraum (nicht dargestellt) entsprechender Größe zugeordnet ist, so daß die Saugeinheit 54 im Sinne einer Saugpatrone in den Unterbau 7 einsetzbar und befestigbar ist, wozu ein Flansch 55a am Gehäuse 55 und diesen durchfassende Befestigungsschrauben dienen können. In der Saugeinheit 54 ist die Saugmaschine 25, der Staubabscheider 34 das Filter 35, insbesondere Kohlefilter für HG und MMA (Quecksilber- und Metylmetacrylatdämpfe), vorzugsweise in Form eines hochkant angeordneten, schmalen Filterbeutels eine vertikale Wand 56 als Abdeckung und ein Außenabdeckblech 58 angeordnet.

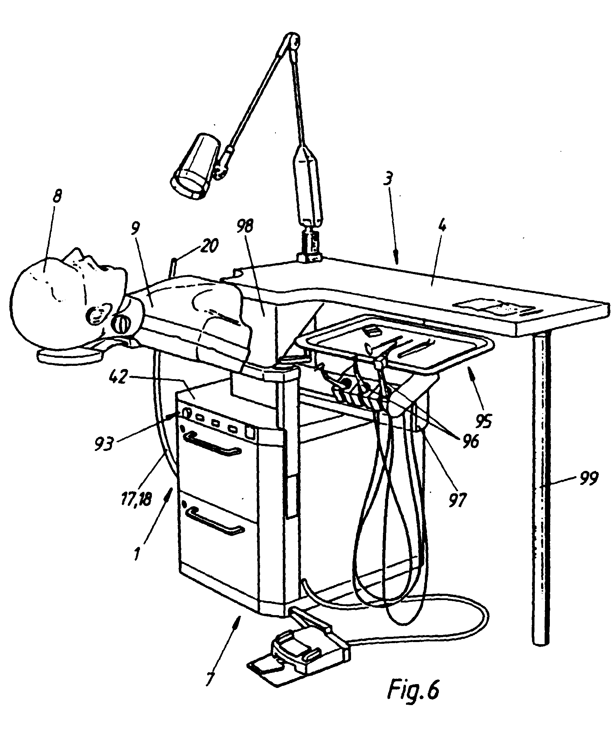

Zur Verbindung des Saugleitungsteils 41 mit der Saugeinheit 54 durch einen nur in Fig. 5 dargestellten flexiblen Saugschlauch 59, mit dem flexiblen Saugschlauch 47 des Absaugmauls 15, mit dem Flüssigkeits-Sammelbehälter 33 und dem flexiblen Schlauch 18 des Saugrohrs 19 weist das Saugleitungsteil 41 fünf Verbindungsöffnungen 61 bis 65 auf. Die erste Verbindungsöffnung 61 ist an der Unterseite des rechten Endbereichs des Saugleitungsrohrabschnitts 43a oder an der Unterseite des Saugleitungsrohrabschnitts 43c angeordnet und sie wird vorzugsweise durch einen nach unten ragenden Anschlußstutzen 66 (Fig. 5) gebildet, der die Deckwand 42 des schrankförmigen Unterbaus 7 in einem Loch 42a nach unten durchfaßt, wobei der Saugschlauch 59 durch eine Steckverbindung 67, eine Klemmverbindung oder einen Bajonettverschluß mit dem Anschlußstutzen 66 verbunden ist.

Die zweite Verbindungsöffnung 62 befindet sich an der Oberseite des rechten Endbereichs des Saugleitungsteils 41, vorzugsweise dem Anschlußstutzen 66 gegenüberliegend. Sie wird vorzugsweise durch eine Steckverbindung 68 oder Steckfassung gebildet, in die das zugehörige Ende des flexiblen Saugschlauchs 47 ggfs. mit einem entsprechenden Endstück 47a einsteckbar ist, wobei der flexible Schlauch 47 den den einen Saugleitungsabschnitt bildenden Hohlraum 69 des Saugleitungsteils 41 so durchsetzt, daß er in der eingesteckten Stellung nur mit der ersten Verbindungsöffnung 61 bzw. dem Anschlußstutzen 66 in Verbindung steht und den Hohlraum 69 verschließt, so daß in der eingesteckten Stellung ein Strömungsdurchgang A nur zwischen dem flexiblen Schlauch 47 und dem Anschlußstutzen 66 bzw. dem Saugschlauch 59 besteht. Bei aus der Steckfassung 68 herausgezogenem Saugschlauch 47 ist dagegen der Durchgang B vom Hohlraum 69 zum Saugschlauch 59 offen, wobei zum Verschließen der zweiten Verbindungsöffnung 62 eine Verschlußklappe 71 am Saugleitungsteil 41 in einem Gelenk 72 schwenkbar gelagert ist, die in ihrer heruntergeklappten Verschlußstellung die zweite Verbindungsöffnung 62 schließt und abdichtet.

Die dritten und vierten Verbindungsöffnungen 63 und 64 zur Verbindung mit dem Sammelbehälter 33 sind jeweils an der Unterseite im Bereich der Saugleitungsrohrabschnitte 43b, 43d (Fig. 4) vorgesehen, und sie fluchten mit an der Oberseite des Sammelbehälters 33 angeordneten Verbindungsöffnungen 63a, 64a. Zur Abdichtung des Saugleitungsteils 41 und des Sammelbehälters 33 gegeneinander im Bereich der Ränder der vorgenannten Verbindungsöffnungspaare läßt sich durch eine Druckbeaufschlagung in einfacher Weise sicherstellen, die vorzugsweise am Saugluftteil 41 wirkt und letzteres gegen die Oberseite des Sammelbehälters 33 elastisch vorspannt. Außerdem läßt sich die Montage und die Demontage des Sammelbehälters 33 dadurch erleichtern und verbessern, daß das dem Sammelbehälter 33 zugewandte Ende des vorzugsweise steifen Saugleitungsteils 41 vertikal nachgiebig angeordnet ist. Vorzugsweise ist hierzu das Saugleitungsteil 41 an seinem dem Sammelbehälter 33 abgewandten Ende geringfügig nachgiebig bzw. kippbar gelagert, so daß sein dem Sammelbehälter 33 zugewandtes Ende geringfügig angehoben bzw. gekippt werden kann und durch die vorgenannte Federkraft nach unten beaufschlagt ist. Diese Vorspannung wird beim vorliegenden Ausführungsbeispiel durch eine Druckfeder 73 gebildet, die auf einem vertikalen Bolzen 74 nach oben abgestützt sitzt und mit ihrem unteren Ende gegen das Saugluftteil 41 drückt und es nach unten elastisch beaufschlagt. Vorzugsweise befindet sich das Durchgangsloch für den Bolzen 74 in einer die zugehörige Deckwand und Bodenwand des Saugluftteils 41 miteinander dicht verbindenden Einziehung 75 oder Materialansammlung, so daß der Bolzen 74 den Hohlraum 69 des Saugleitungsteils 41 nicht durchsetzt und keine Abdichtungsprobleme bestehen.

Es ist auch vorteilhaft, eine Formschlußverbindung zwischen dem Saugluftteil 41 und dem Sammelbehälter 33 in deren Paßstellung vorzusehen, die eine horizontale Verschiebung des Sammelbehälters 33 und somit eine unbeabsichtigte Lösung der Verbindung verhindert. Eine solche Formschlußverbindung kann durch bezüglich des oder der Verbindungsöffnungen 63, 64 bzw. 63a, 64a einander gegenüberliegende oder letztere umgebende Anschlagteile 77, 78 gebildet sein, die den Sammelbehälter 33 in der Paßstellung in vorzugsweise zwei rechtwinklig zueinanderstehenden Richtungen zentrieren. Bei der vorliegenden Ausgestaltung sind jeweils auf der einen Seite der Verbindungslöcher befindliche Rast 79, hier an der Unterseite des Saugleitungsteils 41 angeordnet und vorzugsweise beidseitig mit schrägen Anlaufflächen versehen, die ein Überdrucken des Saugleitungsteils 41 durch horizontales Verschieben des Sammelbehälters 33 ermöglichen. Hierdurch wird die Montage des Sammelbehälters 33 wesentlich vereinfacht, weil dieser durch horizontale Verschiebung in seine Paßstellung bringbar ist, wobei das Saugleitungsteil 41 nach oben ausweicht und in der Paßstellung einrastet und den Sammelbehälter formschlüssig sichert. Bei der vorliegenden Ausgestaltung sind die Verbindungsöffnungen 63a, 64a jeweils in einem nach unten bzw. nach oben gerichteten Vorsprung des Saugleitungsteils 41 oder Sammelbehälters 33 angeordnet, so daß zwischen den Vorsprüngen 82, 83 oberseitige und unterseitige Ausnehmungen 84, 85 an der Unterseite des Saugleitungsteils 41 und an der Oberseite des Wasserbehälters 33 vorhanden sind. Diese Ausgestaltung ermöglicht es, den Wasserbehälter 33 in einer bezüglich seiner Paßstellung seitlich versetzten Position zwischen dem Saugleitungsteil 41 und dem Tragschenkel 45 vorzugsweise bis gegen die Seitenwand 46 einzusetzen (s. Bewegungspfeil 86) und dann in Längsrichtung, hier entlang der Seitenwand 46 bis in die Paßstellung zu verschieben. Die Demontage des Sammelbehälters 33 erfolgt in umgekehrter Richtung.

Das vorbeschriebene Ausweichen des Saugleitungsteils 41 nach oben beim Einsetzen des Sammelbehälters 33 kann aufgrund von elastischer Biegsamkeit oder vorzugsweise hochschwenkbarer bzw. kippbarer Lagerung an seinem anderen Endbereich erfolgen. Bei der vorliegenden Ausgestaltung ist der vorzugsweise einstückig angespritzte Anschlußstutzen 6 kippbar im Loch 42 gehalten. Es können hierzu auf und/oder unter dem Lochrand Ringe 66a aus elastischem Material angeordnet sein, die durch eine auf dem Anschlußstutzen 66 aufgeschraubte Mutter 66b leicht zusammengedrückt sind.

Die fünfte Verbindungsöffnung 65 für den flexiblen Schlauch 18 des Sprayabsaugers 17 kann ebenfalls an der Unterseite des Saugleitungsrohrabschnitts 43c angeordnet sein und ist bei der vorliegenden Ausgestaltung an der nach vorne gerichteten Stirnseite des Saugleitungsrohrabschnitts 43d angeordnet. An diese Verbindungsöffnung 65 ist der flexible Schlauch 18 vorzugsweise durch eine Schraub- oder Steckfassung lösbar angeschlossen.

Bei aus der Steckfassung 67 entferntem Saugschlauch 47 und eingeschalteter Saugmaschine 25 strömt die Saugluft vom Sprayabsauger 20 (mit Wasser oder Spray) in den Saugleitungsrohrabschnitt 43d, durch das vordere Verbindungsöffnungspaar 64, 64a in den Sammelbehälter 33, durch ein vertikales Wasserabscheiderrohr 87, das sich von der Verbindungsöffnung 63a in den Sammelbehälter 33 erstreckt, in das Saugluftrohr 43 und durch den Saugschlauch 59 und über die Saugmaschine 25 zur Abführungsleitung 36.

Zur Abdeckung der vorbeschriebenen Absauganlage 24 ist ein horizontales Abdeckblech 88 vorgesehen, das auf den Unterbau 7 oder auf das Saugleitungsteil 41 aufsetzbar und durch geeignete Befestigungsmittel gehalten ist. Im Bereich der zweiten Befestigungsöffnung 62 ist im Abdeckblech 88 ein Loch 91 vorhanden, das den Anschluß des Saugschlauchs ermöglicht.

Die vorbeschriebene Halterung des Sammelbehälters 33 ermöglicht einen handhabungsfreundlichen Ein- und Ausbau z.B. zum Entleeren. Außerdem läßt sich aufgrund der seitlichen Versenkung des Sammelbehälters 33 eine kleine Bauweise des Gerätes 6 und ein großes Volumen für den Sammelbehälter 33 verwirklichen, da dieser sich über die gesamte Seitenfläche des Unterbaus 7 erstrecken kann. Es ist von Vorteil, die Anschlagteile 77, 78 so anzuordnen, daß ein falscher Einbau des Sammelbehälters 33 formschlüssig verhindert ist. Es ist außerdem vorteilhaft, dem Sammelbehälter 33 eine nur in Fig. 3 durch den Schwimmer 32 dargestellte Sicherheitsvorrichtung zuzuordnen, die die Saugmaschine 25 durch den Schwimmer 32 selbst und einen nicht dargestellten Schalter aufgrund der Niveauanhebung abgeschaltet und/oder eine optische, akustische oder elektrische Anzeige liefert, wenn der Sammelbehälter 33 voll ist. Es ist außerdem vorteilhaft, eine weitere Sicherheitsvorrichtung mit einem Kontaktschalter und einem Kontaktelement (nicht dargestellt) vorzusehen, der bzw. das durch den Sammelbehälter 33 in dessen Montagestellung beaufschlagt wird und das ebenfalls eine optische, akustische oder elektrische Anzeige liefert, wenn der Sammelbehälter 33 nicht oder falsch montiert ist, vorzugsweise den Lauf der Saugmaschine 25 verhindert.

Vorzugsweise ist auch die vorhandene elektrische Steuereinrichtung insbesondere in den oberen Bereich des Unterteils 7 integriert. An der Frontseite des Unterbaus 7, oder Schranks vorzugsweise an dessen Deckwand 42 sind Betätigungselemente 93 zur elektrischen Steuerung vorgesehen. Es ist auch ein Fußschalter 94 vorgesehen, z.B. zum Einschalten nicht dargestellter elektrisch oder pneumatisch antreibbarer Bearbeitungswerkzeuge, die dem zahntechnischen Gerät 2 zugeordnet sind oder zum Einschalten von zahnärztlichen Behandlungsinstrumenten.

Das Lehr- und Übungsgerät 1 nach Fig. 6, bei dem gleiche oder vergleichbare Teile mit gleichen Bezugszeichen versehen sind, unterscheidet sich von den vorbeschriebenen Ausgestaltungen dadurch, daß es nicht aus zwei separaten. kombinierbaren Geräten 2, 6 besteht, sondern als vorzugsweise feststehende Einheit ausgebildet ist. In Fig. 6 ist eine auch bei der Ausgestaltung nach Fig. 1 vorhandene Halteeinrichtung 95 für zahnärztliche, mit Versorgungsschläuchen verbundene Behandlungsinstrumente 96 vorgesehen, die an einem horizontalen Schwenkarm 97 vorzugsweise horizontal drehbar gelagert sein kann und oberseitig eine tablettförmige Tragfläche für Behandlungswerkzeuge aufweist. Der horizontale Schwenkarm 97 kann entsprechend dem vorbeschriebenen horizontalen Schwenkarm 48 ausgebildet und gelagert sein. Die Halteeinrichtung 95 kann zusätzlich oder anstelle einer vorbeschriebenen Staubabsaugvorrichtung 14 mit vom Schwenkarm 48 getragenen Absaugmaul 15 vorhanden sein. In Fig. 1 ist die Halteeinrichtung 95 in eine hintere Parkstellung unter die Arbeitstischplatte 4 geschwenkt, da sie nicht benötigt wird. In einem solchen Falle sind die horizontalen Schwenkarme 48, 97 übereinander schwenkbar.

Beim Lehr- und Übungsgerät 1 nach Fig. 6 ist eine Arbeitstischplatte 4 vorgesehen, die an ihrem dem zahnärztlichen Gerät 6 zugewandten Ende auf dessen Unterbau 7 abgestützt ist, z.B. mittels einer Tragsäule oder Konsole 98. Das andere Ende der Arbeitstischplatte 4 ist durch ein vorzugsweise säulenförmiges Tischbein 99 am Boden abgestützt. Bei dieser Ausgestaltung kann die Arbeitstischplatte 4 im Bereich der Halteeinrichtung 95 frontseitig ausgespart sein, so daß sich eine Winkelform für die Arbeitstischplatte 4 ergibt.

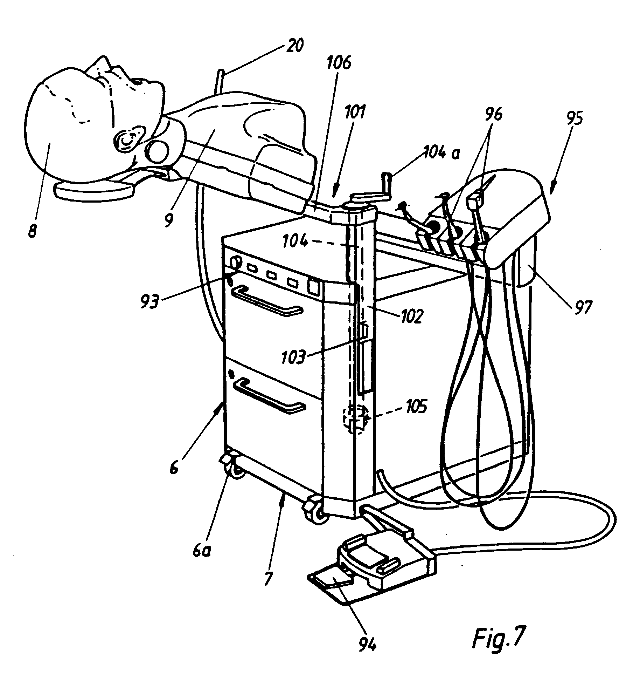

Im folgenden wird eine weitere Ausgestaltungsvariante für ein Lehr- und Übungsgerät 1 anhand der Fig. 7 beschrieben, bei der gleiche oder vergleichbare Teile ebenfalls mit den gleichen Bezugszeichen versehen sind. Diese Ausgestaltungsvariante ist bei allen vorbeschriebenen Ausführungsbeispielen verwirklicht.

Um den Phantomkopf 8 bzw. die Phantombüste 9 an unterschiedlich hohe Arbeitspositionen anpassen zu können, ist der vorhandene Träger 101 für den Phantomkopf 8 oder die Phantombüste 9 vertikal verstellbar und in der jeweiligen Höhenstellung feststellbar am zahnärztlichen Gerät 6 gelagert. Hierzu dient eine vertikale, im Querschnitt vorzugsweise viereckige Tragsäule 102, die an bzw. in einer vertikalen Führung 103 des Unterbaus 7, vertikal verschiebbar gelagert und dabei undrehbar gehalten ist. Bei der vorliegenden Ausgestaltung ist im Unterbau 7, vorzugsweise im vorderen Seiten- insbesondere Eckenbereich einer Seite, hier rechts, eine vertikale Führungsausnehmung mit einer der Tragsäule 102 entsprechenden Querschnittform und -größe vorgesehen, in der die Tragsäule 102 vertikal verschiebbar gelagert ist. Zum vertikalen Verschieben dient eine vertikale, in der Tragsäule 102 drehbar gelagerte Gewindespindel 104, die das obere geschlossene Ende der Tragsäule 102 in einem Loch durchragt und an diesem Ende drehfest mit einer Kurbel 104a verbunden oder verbindbar ist. In der hohlen Tragsäule 102 oder unterhalb davon ist eine am Unterbau 7 befestigte Spindelmutter 105 angeordnet, in die die Gewindespindel 104 eingeschraubt ist. Die Gewindespindel 104 ist in der Tragsäule 102 drehbar jedoch in ihrer Längsrichtung unverschiebbar gelagert, so daß durch ein Ein- oder Ausschrauben der Gewindespindel 104 die Tragsäule 102 mit der Gewindespindel 104 vertikal mitbewegt wird und somit an die gewünschte Arbeitshöhe angepaßt werden kann. Wie bereits beim Ausführungsbeispiel nach Fig. 1 kann auch hier der Phantomkopf 8 oder die Phantombüste 9 am durch einen horizontalen Tragarm 106 oder eine horizontale Gelenkwelle gebildeten Träger 101 vorzugsweise mittig an der Vorderseite des Unterteils 7 hoch- und herunterschwenkbar und in der jeweiligen Schwenk- oder Arbeitsstellung feststellbar gelagert sein.
Das zahnärztliche Gerät nach Fig. 7 kann ein selbständiges Einzelgerät oder auch ein mit einem zahntechnischen Gerät 2 kombiniertes Gerät sein.

## Patentansprüche

1. Lehr- und Übungsgerät (1) zur Simulation und Übung zahnärztlich-klinischer Arbeitsgänge und zur Durchführung zahntechnischer Arbeiten, mit einer Flüssigkeits-Absaugvorrichtung (17) und einer Feststoff-Absaugvorrichtung (14), wobei für beide Absaugvorrichtungen (14, 17) eine gemeinsame Unterdruckquelle mit einem Saugleitungsabschnitt (26, 59) vorgesehen ist, der an einem Abzweig (27) mit zwei Saugleitungszweigen (28, 29) zu den Absaugvorrichtungen (14, 17) verzweigt, und wobei im Bereich des Abzweigs (27) eine Umschaltvorrichtung (37) zum Öffnen des einen Saugleitungszweigs und gleichzeitigem Schließen des anderen Saugleitungszweigs (28, 29) angeordnet ist.

2. Lehr- und Übungsgerät nach Anspruch 1,
dadurch **gekennzeichnet,**
daß einer der beiden Saugleitungszweige (28, 29) vorzugsweise der Saugleitungszweig (29) der Feststoff-Absaugvorrichtung (14) durch eine Schnellkupplung (68) mit dem Abzweig (27) oder einem Teil dieses Saugleitungszweigs (29) lösbar verbindbar ist.

3. Lehr- und Übungsgerät nach Anspruch 2,
dadurch **gekennzeichnet,**
daß die Schnellkupplung durch eine Steckkupplung oder Steckfassung (68) gebildet ist.

4. Lehr- und Übungsgerät nach Anspruch 3,
dadurch **gekennzeichnet,**
daß das einsteckbare Ende (47a) des lösbar verbindbaren Saugleitungszweigs (29) in seiner eingesteckten Stellung den anderen Saugleitungszweig (28) sperrt und mit dem gemeinsamen Saugleitungsabschnitt (26, 59) in Verbindung steht, und daß der Einstecköffnung (62) ein vorzugsweise durch einen Klappdeckel (71) gebildetes Verschlußteil zugeordnet ist, das die Einstecköffnung bei herausgezogenem Ende (47a) schließt.

5. Lehr- und Übungsgerät nach einem der vorherigen Ansprüche,
dadurch **gekennzeichnet,**
daß es aus einem vorzugsweise feststehenden zahntechnischen Lehr- und Übungsgerät (2) und einem vorzugsweise ortsbeweglichen zahnärztlichen Lehr- und Übungsgerät (6) kombinierbar ist, daß die Staubabsaugvorrichtung (14) dem zahntechnischen Lehr- und Übungsgerät (2) zugeordnet ist, und daß die Flüssigkeitabsaugvorrichtung (17) dem zahnärztlichen Lehr- und Übungsgerät (6) zugeordnet ist.

6. Lehr- und Übungsgerät nach Anspruch 5,
dadurch **gekennzeichnet,**
daß die gemeinsame Unterdruckquelle (25) und der gemeinsame Saugleitungsabschnitt (26, 59) dem zahnärztlichen Lehr- und Übungsgerät (6) zugeordnet, vorzugsweise darin integriert sind.

7. Lehr- und Übungsgerät nach einem der vorherigen Ansprüche,
dadurch **gekennzeichnet,**
daß dem Saugleitungsabschnitt (28) der Flüssigkeitabsaugvorrichtung (17) ein Wasserabscheider (31) zugeordnet ist.

8. Lehr- und Übungsgerät nach einem der vorherigen Ansprüche,
dadurch **gekennzeichnet,**
daß im gemeinsamen Saugleitungs- und/oder Abführungsabschnitt (26, 36) ein Staubabscheider (34) und/oder Filter (35), vorzugsweise ein Kohlefilter, angeordnet ist bzw. sind.

9. Lehr- und Übungsgerät nach einem der vorherigen Ansprüche,
dadurch **gekennzeichnet,**
daß das zahnärztliche Lehr- und Übungsgerät (6) einen Phantomkopf (8) ggfs. mit Phantombüste (9) aufweist, der bezüglich seiner Arbeitsstellung einstellbar an einem gestell- oder schrankförmigen Unterbau (7) gehalten ist, daß die vorzugsweise durch eine Saugmaschine (25) gebildete Unterdruckquelle an der einen Seite des Unterbaus (7) und ein Wasserabscheider (31) an der anderen Seite des Unterbaus (7) angeordnet sind und durch ein sich im oberen Bereich des Unterbaus (7) quer erstreckendes Saugleitungsteil (41) miteinander verbunden sind, das vorzugsweise auf einer Deckwand (42) des Unterbaus (7) angeordnet ist.

10. Lehr- und Übungsgerät nach Anspruch 9,
dadurch **gekennzeichnet,**
daß der Wasserabscheider (31) in einem Sammelbehälter (33) angeordnet ist, daß der Sammelbehälter (33) vorzugsweise an seiner Oberseite zwei Verbindungsöffnungen (63a, 64a) aufweist, die mit vorzugsweise an der Unterseite des Saugleitungszweigs (28) der Flüssigkeitabsaugvorrichtung (17) angeordneten Verbindungsöffnungen (83, 84) dicht verbindbar sind.

11. Lehr- und Übungsgerät nach Anspruch 9 oder 10,
dadurch **gekennzeichnet,**
daß das Saugleitungsteil (41) den Unterbau (7) mit einem Saugleitungsrohrabschnitt (43b) horizontal überragt, daß ein weiterer Saugleitungsrohrabschnitt (43d) vorgesehen ist, der den Unterbau (7) ebenfalls an der gleichen Seite überragt und dessen Innenquerschnitt vom Innenquerschnitt des anderen Saugleitungsrohrabschnitts (43b) getrennt ist und daß der Sammelbehälter (33) zwischen diesen Saugleitungsrohrabschnitten (43b, 43d) und einem ihn untergreifenden Tragteil, insbesondere Tragschenkel (45) mit Dichtwirkung eingesetzt ist.

12. Lehr- und Übungsgerät nach Anspruch 11,
dadurch **gekennzeichnet,**
daß die beiden Saugleitungsrohrabschnitte (43b, 43c) fest miteinander verbundene Teile eines insbesondere steifen Saugleitungsrohrabschnitts (41) sind, der vertikal geringfügig beweglich, vorzugsweise im Bereich seines den Saugleitungsrohrabschnitten (43d, 43c) abgewandten Endes vertikal kippbar gelagert ist, und vorzugsweise durch die Kraft einer Feder nach unten gegen den Sammelbehälter (33) spannbar ist.

13. Lehr- und Übungsgerät nach Anspruch 12,
dadurch **gekennzeichnet,**
daß der Sammelbehälter (33) durch eine horizontale Bewegung in Verbindung oder außer Verbindung mit den Saugleitungsrohrabschnitten (43b, 43d) bringbar ist, und in Anschläge (77, 78, 79) begrenzt, insbesondere zentriert ist.

14. Lehr- und Übungsgerät nach einem der vorherigen Ansprüche,
dadurch **gekennzeichnet,**
daß die Schnell- oder Steckkupplung oder Steckfassung (68) für den vorzugsweise der Staubabsaugvorrichtung (14) zugeordneten Saugleitungszweig (29) in dem Endbereich des Saugleitungsteils (41) angeordnet ist, der der Unterdruckquelle (25) zugewandt ist.

15. Lehr- und Übungsgerät nach einem der vorherigen Ansprüche,
dadurch **gekennzeichnet,**
daß die Feststoff-Absaugvorrichtung (14) ein Absaugmaul (15) aufweist, dessen Gehäuse (51) am zahntechnischen Lehr- und Übungsgerät (2), insbesondere an dessen Arbeitstisch (3) oder am zahnärztlichen Lehr- und Übungsgerät (6) gehalten ist, vorzugsweise an einem horizontalen Tragarm (48), der insbesondere horizontal schwenkbar am oder auf dem Unterteil (7) gelagert ist.

16. Lehr- und Übungsgerät nach einem der vorherigen Ansprüche,
dadurch **gekennzeichnet,**
daß die Flüssigkeits-Absaugvorrichtung (17) eine Sprayabsaugvorrichtung ist.

17. Lehr- und Übungsgerät nach einem der vorherigen Ansprüche,
dadurch **gekennzeichnet,**
daß der Saugleitungszweig (28) der Flüssigkeits-Absaugvorrichtung (17) und/oder der Saugleitungszweig (2a) der Feststoff-Absaugvorrichtung (14) jeweils durch einen flexiblen Schlauch (18, 47) gebildet ist bzw. sind.

## Claims

1. Teaching and training unit (1) for the simulation and practice of dental-clinical procedures and for carrying out dentistry work, comprising a fluid suction device (17) and a solids suction device (14), in which there is provided for both suction devices (14, 17) a common low pressure source with a suction line part (26, 59) which, at one spur is branched with two suction line branches (28, 29) to the suction devices (14, 17), and in which there is fitted in the spur (27) area a change-over device (37) to open one suction line branch whilst at the same time closing the other suction line branch (28, 29).

2. Teaching and training unit according to Claim 1,
characterized in that
one of the two suction line branches (28, 29), for preference the suction line branch of the solids suction device (14), can be connected by means of a rapid-action coupling (68) to the spur (27) or to a part of this suction line branch (29) in such a way that it can be detached.

3. Teaching and training unit according to Claim 2,
characterized in that
the rapid-action coupling takes the form of a plug-in coupling or plug-in socket (68).

4. Teaching and training unit according to Claim 3,
characterized in that
in its plugged-in position, the plug-in end (47a) of the detachable branch of the suction line (29) closes the other suction line branch and is connected to the common suction line part (26, 59), and that the plug-in opening (62) has an associated closure part (62) which for preference takes the form of a hinged cover (71) which closes the plug-in opening when the end (47a) has been extracted.

5. Teaching and training unit according to one of the foregoing Claims,
characterized in that
it can be a combination of a preferably fixed dentistry teaching and training unit (2) and a preferably mobile dental teaching and training unit (6), that the device for extracting the dust (14) is attached to the dentistry teaching and training unit (2) and that the fluid suction device (17) is attached to the dental teaching and training unit (6).

6. Teaching and training unit according to Claim 5,
characterized in that
the common low pressure source (25) and the common suction line part (26, 59) are associated with the dental teaching and training unit (6) and preferably built into it.

7. Teaching and training unit according to one of the foregoing Claims,
characterized in that
the suction line part (28) of the fluid suction device (17) has an associated water trap (31).

8. Teaching and training unit according to one of the foregoing Claims,
characterized in that
a dust separator (34) and/or filter (35), preferably a carbon filter, is or are positioned in the common suction line part and/or discharge part (26, 36).

9. Teaching and training unit according to one of the foregoing Claims,
characterized in that
the dental teaching and training unit (6) has an anatomical model head (8), with an anatomical model bust (9) where necessary, which is held on a frame or cabinet type support (7) so that the working position can be adjusted, that the low pressure source which preferably takes the form of a suction machine (25) is located on one side of the support (7) and a water trap (31) is located on the other side of the support (7) and are connected together by means of a suction line part (41) which extends crosswise in the upper area of the support (7) and which is preferably mounted on a top surface (42) of the support (7).

10. Teaching and training unit according to Claim 9,
characterized in that
the water trap (31) is located in a collecting tank (33), that the collecting tank (33) has two connection ports (63a, 64a) preferably on its top side which can be connected to connection ports (83, 84) which are located for preference on the underside of the suction line branch (28) of the fluid suction device (17) to provide a tight seal.

11. Teaching and training unit according to Claim 9 or 10,
characterized in that
the suction line part (41) projects horizontally over the support (7) with a tubular section of suction line (43b), that an additional tubular section of suction line (43d) is provided which projects over the support (7), also on the same side, and the inside section of which is separated from the inside section of the other tubular section of suction line (43b) and that the collecting tank (33) is inserted to provide a tight seal between these tubular sections of suction line (43b, 43d) and a supporting structure, in particular a supporting leg (45) which is fastened to it at the bottom.

12. Teaching and training unit according to Claim 11,
characterized in that
the two tubular sections of suction line (43b, 43c) are securely joined parts of a particularly rigid tubular section of suction line (41) which has slight vertical movement and is mounted so that it can tilt vertically preferably in the end area facing away from the tubular sections of suction line (43d, 43c) and can be clamped, preferably by the force of a spring downwards against the collecting tank (33).

13. Teaching and training unit according to Claim 12,
characterized in that
the collecting tank (33) can, by moving it horizontally, be connected to or disconnected from the tubular sections of suction line (43b, 43d) and is limited, and particularly centred, in stops (77, 78, 79).

14. Teaching and training unit according to one of the foregoing Claims,
characterized in that
the quick-action or plug-in coupling or plug-in socket (68) for the suction line branch (29) which is preferably associated with the dust suction device (14) is located in the end area of that part of the suction line (41) which is facing the low pressure source.

15. Teaching and training unit according to one of the foregoing Claims,
characterized in that
the solids suction device (14) has a suction mouth (15), the housing (51) of which is supported on the dentistry teaching and training unit (2), especially on its work table (3) or on the dental teaching and training unit (6), preferably on a horizontal supporting arm (48) which is mounted on the supporting part (7) in such a way that it can pivot, particularly horizontally.

16. Teaching and training unit according to one of the foregoing Claims,
characterized in that
the fluid suction device (17) is a spray suction device.

17. Teaching and training unit according to one of the foregoing Claims,
characterized in that
the suction line branch (28) of the fluid suction device (17) and/or the suction line branch (2a) of the solids suction device (14) each takes or take the form of a flexible hose (18, 47)

## Revendications

1. Appareil (1) d'enseignement et d'entraînement pour la simulation et l'apprentissage de méthodes de travail clinico-dentaire ainsi que pour la réalisation de travaux de dentisterie, comportant un dispositif (17) d'aspiration des matières liquides et un dispositif (14) d'aspiration des matières solides, une source de pression négative commune avec un tronçon (26, 59) de conduite d'aspiration qui, au niveau d'une dérivation (27), se divise en deux branches (28, 29) de conduite d'aspiration menant aux dispositifs d'aspiration (14, 17) étant prévue pour les deux dispositifs d'aspiration (14, 17) et un dispositif de commutation (37) pour ouvrir l'une des branches de conduite d'aspiration et, simultanément, fermer l'autre branche (28, 29) de conduite d'aspiration étant disposé dans la région de la dérivation (27).

2. Appareil d'enseignement et d'entraînement selon la revendication 1, caractérisé par le fait que l'une des deux branches (28, 29) de conduite d'aspiration, de préférence la branche (29) de conduite d'aspiration du dispositif (14) d'aspiration des matières solides peut être connectée de manière séparable, au moyen d'un coupleur rapide (68), à la dérivation (27) ou à une partie de la branche (29) de conduite d'aspiration.

3. Appareil d'enseignement et d'entraînement selon la revendication 2, caractérisé par le fait que le coupleur rapide est formé par un coupleur enfichable mâle ou femelle (68).

4. Appareil d'enseignement et d'entraînement selon la revendication 3, caractérisé par le fait que l'extrémité (47a) enfichable de la branche (29) de conduite d'aspiration pouvant être connectée de manière séparable, dans sa position enfichée, ferme l'autre branche (28) de conduite d'aspiration et communique avec le tronçon (26, 59) de conduite d'aspiration commun et par le fait qu'un élément d'obturation, de préférence formé par un couvercle (71) articulé, qui ferme l'orifice d'enfichage (62) lorsque l'extrémité (47a) est retirée, est associé audit orifice d'enfichage.

5. Appareil d'enseignement et d'entraînement selon une des revendications précédentes, caractérisé par le fait qu'il est formé d'une combinaison d'un appareil d'enseignement et d'entraînement (2) en dentisterie de préférence fixe et d'un appareil d'enseignement et d'entraînement (6) dentaire de préférence mobile, par le fait que le dispositif (14) d'aspiration des poussières est associé à l'appareil d'enseignement et d'entraînement (2) en dentisterie et que le dispositif (17) d'aspiration des liquides est associé à l'appareil d'enseignement et d'entraînement (6) dentaire.

6. Appareil d'enseignement et d'entraînement selon la revendication 5, caractérisé par le fait que la source (25) commune de pression négative et le tronçon (26, 59) de conduite d'aspiration commun sont associés à l'appareil d'enseignement et d'entraînement (6) dentaire, de préférence sont intégrés à celui-ci.

7. Appareil d'enseignement et d'entraînement selon une des revendications précédentes, caractérisé par le fait qu'un séparateur d'eau (31) est associé au tronçon (28) de conduite d'aspiration du dispositif (17) d'aspiration des liquides.

8. Appareil d'enseignement et d'entraînement selon une des revendications précédentes, caractérisé par le fait qu'un séparateur de poussières et/ou un filtre (35), de préférence un filtre à charbon, est ou sont disposé(s) dans le tronçon de conduite d'aspiration et/ou le tronçon d'évacuation (26, 36) commun.

9. Appareil d'enseignement et d'entraînement selon une des revendications précédentes, caractérisé par le fait que l'appareil d'enseignement et d'entraînement (6) présente une tête mannequin (8), le cas échéant avec un buste mannequin (9), qui est fixée sur une base (7) en forme de bâti ou d'armoire avec possibilité de réglage de la position de travail, par le fait que la source de pression négative qui est formée de préférence par une machine aspirante (25) est disposée d'un côté de la base (7), qu'un séparateur d'eau (31) est disposé de l'autre côté de la base (7) et que ces deux éléments sont reliés l'un à l'autre par une partie de conduite d'aspiration (41) qui s'étend transversalement dans la région supérieure de la base (7) et est disposée de préférence sur une paroi formant couvercle (42) de ladite base (7).

10. Appareil d'enseignement et d'entraînement selon la revendication 9, caractérisé par le fait que le séparateur d'eau (31) est placé dans un récipient de collecte (33), par le fait que le récipient de collecte (33) présente de préférence sur sa face supérieure, deux orifices (63a, 64a) de raccordement qui peuvent être connectés de manière étanche à des orifices de raccordement (83, 84) disposés de préférence sur la face inférieure de la branche (28) de conduite d'aspiration du dispositif d'aspiration (17) des liquides.

11. Appareil d'enseignement et d'entraînement selon la revendication 9 ou 10, caractérisé par le fait que la partie (41) de conduite d'aspiration dépasse horizontalement par un tronçon (43b) de tube d'aspiration par rapport à la base (7), par le fait qu'il est prévu un tronçon (43d) de tube d'aspiration supplémentaire qui dépasse du même côté par rapport à la base (7) et dont la section intérieure est dissociée de la section intérieure de l'autre tronçon (43b) de tube d'aspiration et par le fait que le récipient (33) de collecte est monté avec étanchéité entre ces tronçons (43b, 43d) et une partie support, notamment une traverse support (45), qui le saisit par le dessous.

12. Appareil d'enseignement et d'entraînement selon la revendication 11, caractérisé par le fait que les deux tronçons (43b, 43c) de tube d'aspiration sont des éléments liés fermement l'un à l'autre d'un tronçon (41) de tube d'aspiration notamment rigide qui dispose d'une faible liberté de déplacement vertical, de préférence est monté avec possibilité de pivotement vertical dans la région de son extrémité éloignée des tronçons d'aspiration (43d, 43c) et de préférence est précontraint vers le bas, en direction du récipient (33) de collecte, par la force d'un ressort.

13. Appareil d'enseignement et d'entraînement selon la revendication 12, caractérisé par le fait que le récipient (33) de collecte peut être amené en communication ou hors communication avec les tronçons (43b, 43d) de tube d'aspiration par un déplacement horizontal et est limité en particulier est centré par des butées (77, 78, 79).

14. Appareil d'enseignement et d'entraînement selon une des revendications précédentes, caractérisé par le fait que le coupleur rapide ou le coupleur mâle ou femelle enfichable (68) pour la branche (29) de conduite d'aspiration associée de préférence au dispositif (14) d'aspiration des poussières est disposé dans la région d'extrémité du tronçon d'aspiration (14) qui est tournée vers la source de pression négative (25).

15. Appareil d'enseignement et d'entraînement selon une des revendications précédentes, caractérisé par le fait que le dispositif (14) d'aspiration des matières solides présente une bouche d'aspiration (15) dont l'enveloppe (51) est fixée à l'appareil d'enseignement et d'entraînement (2) en dentisterie, notamment à la table de travail (3) de celui-ci, ou à l'appareil d'enseignement et d'entraînement (6) dentaire, de préférence à un bras de support (48) qui est monté avec possibilité de pivotement horizontal sur la base (7).

16. Appareil d'enseignement et d'entraînement selon une des revendications précédentes, caractérisé par le fait que le dispositif (17) d'aspiration des matières liquides est un dispositif d'aspersion et d'aspiration.

17. Appareil d'enseignement et d'entraînement selon une des revendications précédentes, caractérisé par le fait que le tronçon (28) de conduite d'aspiration du dispositif (17) d'aspiration des liquides et/ou la branche d'aspiration (2a) du dispositif (14) d'aspiration des matières solides est ou sont formé(s) chacun d'un tuyau (18, 47) souple.
